# EUROPÄISCHE PATENTSCHRIFT

(11) **EP 4 262 341 B1**
(45) Veröffentlichungstag und Bekanntmachung des Hinweises auf die Patenterteilung: **19.11.2025**
(21) Anmeldenummer: 21835976.8
(22) Anmeldetag: 02.12.2021
(51) Int. Cl.: A01C 7/06, A01C 7/10, A01C 21/00, A01C 7/18, A01C 7/04

(54) **VERFAHREN UND KALIBRIERSYSTEM ZUM ABSTIMMEN DES BETRIEBS EINER VEREINZELUNGSEINRICHTUNG UND DES BETRIEBS EINER PORTIONIEREINRICHTUNG AUFEINANDER**
METHOD AND CALIBRATION SYSTEM FOR MATCHING THE OPERATION OF A SEPARATING DEVICE TO THE OPERATION OF A PORTIONING DEVICE
PROCÉDÉ ET SYSTÈME D'ÉTALONNAGE POUR METTRE EN CORRESPONDANCE DU FONCTIONNEMENT D'UN DISPOSITIF DE SÉPARATION AU FONCTIONNEMENT D'UN DISPOSITIF DE MISE EN PORTIONS

(30) Priorität: 17.12.2020 DE 102020133885
(43) Veröffentlichungstag der Anmeldung: 25.10.2023
(73) Patentinhaber: Amazonen-Werke H. Dreyer SE & Co. KG, 49205 Hasbergen (DE)
(72) Erfinder: DREYER, Justus, 49078 Osnabrück (DE); JOHANNABER, Stefan Jan, 49536 Lienen (DE); TECKEMEYER, Stephan, 49504 Lotte (DE); HILBERT, Florenz, 48282 Emsdetten (DE); TRENTMANN, Markus, 49134 Wallenhorst (DE)
(74) Vertreter: Pelster Behrends Patentanwälte PartG mbB
(86) Internationale Anmeldenummer: PCT/EP2021/083998
(87) Internationale Veröffentlichungsnummer: WO 2022/128511

(56) Entgegenhaltungen:
- WO-A1-2018/203157
- US-A1- 2004 231 575
- US-A1- 2010 282 141
- US-A1- 2018 359 909
- US-B1- 7 726 251

## Beschreibung

Die Erfindung betrifft ein Verfahren zum Abstimmen des Betriebs einer Vereinzelungseinrichtung und des Betriebs einer Portioniereinrichtung einer landwirtschaftlichen Ausbringmaschine aufeinander gemäß des Patentanspruchs 1 und ein Kalibriersystem für eine landwirtschaftliche Ausbringmaschine gemäß des Patentanspruchs 12.

Aus der Druckschrift US 2004/0231575 A1 ist ein Fluid-Abgabesystem bekannt, mittels welchem Flüssigdünger in den Bereich von vereinzelten Saatkörnern abgeben werden kann. Aus der Druckschrift US 2018/0359909 A1 ist ein System zum Ausbringen mehrerer landwirtschaftlicher Produkte auf eine landwirtschaftlich Nutzfläche bekannt. Aus der Druckschrift US 7 726 251 B1 ist eine Sämaschine bekannt.

Zum gleichzeitigen Ausbringen von vereinzelten Saatkörnern und Düngerportionen auf eine landwirtschaftliche Nutzfläche werden vermehrt landwirtschaftliche Ausbringmaschinen eingesetzt, deren Ausbringaggregate über eine Vereinzelungseinrichtung zum Vereinzeln von Saatkörnern und eine Portioniereinrichtung zum Erzeugen von Düngerportionen verfügen.

Düngerportionen, welche mittels einer Portioniereinrichtung einer landwirtschaftlichen Ausbringmaschine erzeugt werden, können in Abhängigkeit der Düngereigenschaften unterschiedliche maschineninterne Förderdauern in der Ausbringmaschine und/oder unterschiedliche maschinenexterne Flugdauern nach der Abgabe durch die Ausbringmaschine aufweisen. Beispielsweise können die Größe, das Gewicht und die Oberflächenbeschaffenheit der Düngerkörner einen Einfluss auf die maschineninterne Förderdauer der Düngerportion in der Ausbringmaschine und/oder einen Einfluss auf die maschinenexterne Flugdauer der Düngerportion nach der Abgabe durch die Ausbringmaschine haben.

Saatkörner, welche mittels einer Vereinzelungseinrichtung einer landwirtschaftlichen Ausbringmaschine vereinzelt werden, können in Abhängigkeit der Saatguteigenschaften ebenfalls unterschiedliche maschineninterne Förderdauern in der Ausbringmaschine und/oder unterschiedliche maschinenexterne Flugdauern nach Abgabe durch die Ausbringmaschine aufweisen. Beispielsweise können die Größe, das Gewicht und die Oberflächenbeschaffenheit der Saatkörner einen Einfluss auf die maschineninterne Förderdauer eines vereinzelten Saatkorns in der Ausbringmaschine und/oder einen Einfluss auf die maschinenexterne Flugdauer eines vereinzelten Saatkorns nach der Abgabe durch die Ausbringmaschine haben. Beispielsweise kann Beize einen Einfluss auf die maschineninterne Förderdauer und die maschinenexterne Flugdauer von Saatkörnern haben.

Um mit einer landwirtschaftlichen Ausbringmaschine unterschiedliche Dünger-Saatgut-Kombinationen ausbringen zu können, ist es erforderlich, dass der Betrieb der Vereinzelungseinrichtung und der Betrieb der Portioniereinrichtung im Rahmen eines Kalibriervorgangs aufeinander abgestimmt werden, sodass eine gewünschte örtliche Ablagebeziehung, beispielsweise ein vorgegebener Längsabstand, der Saatkörner und der Düngerportionen auf der landwirtschaftlichen Nutzfläche erzielt wird.

Die der Erfindung zugrundeliegende Aufgabe besteht somit darin, die Einstellung einer vorgegebenen örtlichen Ablagebeziehung von Saatkörnern und Düngerportionen bei unterschiedlichen Dünger-Saatgut-Kombinationen mit einer landwirtschaftlichen Ausbringmaschine zu ermöglichen.

Die Aufgabe wird gelöst durch ein Verfahren der eingangs genannten Art, wobei das Steuerungssystem im Rahmen des erfindungsgemäßen Verfahrens den saatgutspezifischen Kalibrierwert und/oder den düngerspezifischen Kalibrierwert aus einer manuellen Kalibrierwerteingabe eines Bedieners an einer elektronischen Bedieneinheit des Steuerungssystems oder einem elektronischen Mobilgerät des Steuerungssystems übernimmt oder aus einer Kalibrierdatenbank lädt.

Durch die zumindest temporäre Vorgabe eines Betriebsverhaltens für die Vereinzelungseinrichtung und/oder die Portioniereinrichtung durch das Steuerungssystem wird die vorgegebene örtliche Ablagebeziehung trotz der saatgutspezifischen maschineninternen Förderdauer der vereinzelten Saatkörner in der Ausbringmaschine und/oder der saatgutspezifischen maschinenexternen Flugdauer der vereinzelten Saatkörner nach der Abgabe durch die Ausbringmaschine sowie der düngerspezifischen maschineninternen Förderdauer der erzeugten Düngerportionen in der Ausbringmaschine und/oder der düngerspezifischen maschinenexternen Flugdauer der erzeugten Düngerportionen nach der Abgabe durch die Ausbringmaschine erreicht. Das Abstimmen des Betriebs der Vereinzelungseinrichtung und des Betriebs der Portioniereinrichtung aufeinander kann vor oder während des Ausbringvorgangs erfolgen. Die vorgegebene örtliche Ablagebeziehung kann ein beabsichtigter Längsabstand zwischen den vereinzelten Saatkörnern und den erzeugten Düngerportionen auf der landwirtschaftlichen Nutzfläche sein. Der beabsichtigte Längsabstand kann auch null sein, sodass die vereinzelten Saatkörner und die erzeugten Düngerportionen in Längsrichtung keinen Abstand zueinander aufweisen. Die vereinzelten Saatkörner und die erzeugten Düngerportionen können in unterschiedlichen Ablagetiefen und/oder in Querrichtung beabstandet voneinander abgelegt werden.

Das Steuerungssystem kann eine elektronische Steuereinheit umfassen, die Bestandteil der landwirtschaftlichen Ausbringmaschine ist. Die elektronische Steuereinheit kann ein Jobrechner sein, welcher signalleitend mit der Vereinzelungseinrichtung und/oder der Portioniereinrichtung verbunden ist. Die elektronische Steuereinheit kann Steuersignale für die Vereinzelungseinrichtung und/oder die Portioniereinrichtung erzeugen, über welche der Vereinzelungseinrichtung und/oder der Portioniereinrichtung zumindest temporär ein Betriebsverhalten vorgegeben werden kann.

In einer bevorzugten Ausführungsform des erfindungsgemäßen Verfahrens ist der zumindest eine saatgutspezifische Kalibrierwert ein Kennwert, welcher das maschineninterne Förderverhalten und/oder das maschinenexterne Flugverhalten der vereinzelten Saatkörner charakterisiert. Vorzugsweise ist der saatgutspezifische Kalibrierwert kein Wert, welcher unmittelbar eine Eigenschaft der vereinzelten Saatkörner, wie etwa das Saatkorngewicht, die Saatkornform, die Saatkorngröße oder die Oberflächenbeschaffenheit der Saatkörner, betrifft. Alternativ oder zusätzlich ist der zumindest eine düngerspezifische Kalibrierwert ein Kennwert, welcher das maschineninterne Förderverhalten und/oder das maschinenexterne Flugverhalten der erzeugten Düngerportionen charakterisiert. Vorzugsweise ist der düngerspezifische Kalibrierwert kein Wert, welcher unmittelbar eine Eigenschaft der erzeugten Düngerportion, wie etwa das Portionsgewicht, die Düngerkornform oder die Oberflächenbeschaffenheit der Düngerkörner, betrifft.

Es ist darüber hinaus ein erfindungsgemäßes Verfahren vorteilhaft, bei welchem die von der Vereinzelungseinrichtung vereinzelten Saatkörner zu zeitlich voneinander beabstandeten Kornabgabezeitpunkten von der Vereinzelungseinrichtung, insbesondere in eine Kornförderleitung, abgegeben werden. Alternativ oder zusätzlich werden die von der Portioniereinrichtung erzeugten Düngerportionen zu zeitlich voneinander beabstandeten Düngerabgabezeitpunkten von der Portioniereinrichtung, insbesondere in eine Düngerförderleitung, abgegeben. Über das von dem Steuerungssystem vorgegebene Betriebsverhalten wird vorzugsweise eine Anpassung des Zeitversatzes zwischen den Kornabgabezeitpunkten und den Düngerabgabezeitpunkten veranlasst. Über die Anpassung des Zeitversatzes zwischen den Kornabgabezeitpunkten und den Düngerabgabezeitpunkten wird die örtliche Ablagebeziehung der Saatkörner und der Düngerportionen, insbesondere deren Längsabstand, verändert. Über die Anpassung des Zeitversatzes zwischen den Kornabgabezeitpunkten und den Düngerabgabezeitpunkten erfolgt also eine Anpassung der Abgabetaktung der Vereinzelungseinrichtung und der Abgabetaktung der Portioniereinrichtung aufeinander.

Die Vereinzelungseinrichtung weist zum Vereinzeln von Saatkörnern ein rotierend angetriebenes Vereinzelungselement auf. Das Vereinzelungselement wird von einem Antrieb der Vereinzelungseinrichtung angetrieben. Der Antrieb der Vereinzelungseinrichtung kann ein elektromotorischer, pneumatischer oder hydraulischer Antrieb sein. Das vorgegebene Betriebsverhalten kann Steuerungsvorgaben für den Antrieb der Vereinzelungseinrichtung umfassen.

Die Portioniereinrichtung weist zum Erzeugen von Düngerportionen ein rotierend angetriebenes Portionierelement auf. Das Portionierelement wird von einem Antrieb der Portioniereinrichtung angetrieben. Der Antrieb der Portioniereinrichtung kann ein elektromotorischer, pneumatischer oder hydraulischer Antrieb sein. Das vorgegebene Betriebsverhalten kann Steuerungsvorgaben für den Antrieb der Portioniereinrichtung umfassen.

Über das von dem Steuerungssystem vorgegebene Betriebsverhalten wird eine temporäre Abweichung von einem beabsichtigten Drehzahlverhältnis des Vereinzelungselements und des Portionierelements veranlasst. Durch die temporäre Abweichung von dem beabsichtigten Drehzahlverhältnis des Vereinzelungselements und des Portionierelements wird der Zeitversatz zwischen den Kornabgabezeitpunkten und den Düngerabgabezeitpunkten verändert, sodass beispielsweise ein vorgegebener Längsabstand zwischen den vereinzelten Saatkörnern und den erzeugten Düngerportionen auf der landwirtschaftlichen Nutzfläche eingestellt wird. Alternativ kann die Portioniereinrichtung zum Erzeugen von Düngerportionen auch ein Portionierventil aufweisen, welches beim Öffnen eine Düngerportion abgibt, insbesondere in eine Düngerförderleitung. In diesem Fall entsprechen die Düngerabgabezeitpunkte den Ventilöffnungszeitpunkten. Durch das Anpassen der Ventilöffnungszeitpunkte kann somit ebenfalls der Zeitversatz zwischen dem Kornabgabezeitpunkten und den Düngerabgabezeitpunkten verändert und somit der Längsabstand der Saatkörner und Düngerportionen auf der landwirtschaftlichen Nutzfläche angepasst werden.

In einer erfindungsgemäßen Ausführungsform des Verfahrens übernimmt das Steuerungssystem den saatgutspezifischen Kalibrierwert und/oder den düngerspezifischen Kalibrierwert aus einer manuellen Kalibrierwerteingabe eines Bedieners an einer elektronischen Bedieneinheit des Steuerungssystems oder einem elektronischen Mobilgerät des Steuerungssystems. Das Verfahren kann das Eingeben des saatgutspezifischen Kalibrierwerts und/oder des düngerspezifischen Kalibrierwerts durch den Bediener über die elektronische Bedieneinheit oder das elektronische Mobilgerät umfassen. Die elektronische Bedieneinheit kann beispielsweise ein Terminal sein. Das elektronische Mobilgerät kann ein Mobilfunkgerät, insbesondere ein Smartphone, sein. Der Bediener kann den saatgutspezifischen Kalibrierwert und/oder den düngerspezifischen Kalibrierwert beispielsweise einer Kalibriertabelle oder einem Kalibrierhinweis entnehmen, wobei die Kalibriertabelle oder der Kalibrierhinweis beispielsweise von dem Hersteller der Ausbringmaschine bereitgestellt werden.

In einer erfindungsgemäßen Ausführungsform des Verfahrens lädt das Steuerungssystem den saatgutspezifischen Kalibrierwert und/oder den düngerspezifischen Kalibrierwert aus einer Kalibrierdatenbank. Die Kalibrierdatenbank kann eine maschineninterne oder maschinenexterne Datenbank sein. In der Kalibrierdatenbank sind saatgutspezifische Kalibrierwerte zu verschiedenen Saatgutsorten und/oder düngerspezifische Kalibrierwerte zu verschiedenen Düngersorten hinterlegt. Der saatgutspezifische Kalibrierwert und/oder der düngerspezifische Kalibrierwert werden beispielsweise über einen Kalibrierdatensatz aus der Kalibrierdatenbank geladen. Die Kalibrierdatenbank und/oder die Kalibrierdatensätze werden beispielsweise vom Hersteller der Ausbringmaschine bereitgestellt.

Es ist darüber hinaus ein erfindungsgemäßes Verfahren vorteilhaft, bei welchem das Steuerungssystem den aus der Kalibrierdatenbank zu ladenden saatgutspezifischen Kalibrierwert auf Grundlage einer manuellen Saatgutauswahl eines Bedieners an einer elektronischen Bedieneinheit des Steuerungssystems oder einem elektronischen Mobilgerät des Steuerungssystems bestimmt. Alternativ oder zusätzlich bestimmt das Steuerungssystem den aus der Kalibrierdatenbank zu ladenden düngerspezifischen Kalibrierwert auf Grundlage einer manuellen Düngerauswahl eines Bedieners an einer elektronischen Bedieneinheit des Steuerungssystems oder einem elektronischen Mobilgerät des Steuerungssystems. Die elektronische Bedieneinheit oder das elektronische Mobilgerät zeigt dem Bediener vorzugsweise eine Liste von Saatgutsorten und/oder eine Liste von Düngersorten an, aus welcher der Bediener die auszubringende Saatgutsorte bzw. die auszubringende Düngersorte auswählen kann. In dem Steuerungssystem können zu den auswählbaren Saatgutsorten saatgutspezifische Kalibrierwerte hinterlegt sein. Ferner können zu den auswählbaren Düngersorten düngerspezifische Kalibrierwerte hinterlegt sein. Die saatgutspezifischen Kalibrierwerte und/oder die düngerspezifischen Kalibrierwerte können auf einer Kalibrierdatenbank hinterlegt sein. Die elektronische Bedieneinrichtung kann ein Terminal sein. Das elektronische Mobilgerät kann ein Mobilfunkgerät, insbesondere ein Smartphone, sein.

In einer anderen bevorzugten Ausführungsform des erfindungsgemäßen Verfahrens ermittelt das Steuerungssystem den saatgutspezifischen Kalibrierwert aus Saatguteigenschaften, welche das maschineninterne Förderverhalten und/oder das maschinenexterne Flugverhalten der Saatkörner beeinflussen. Das maschineninterne Förderverhalten der Saatkörner kann deren maschineninterne Förderdauer betreffen. Das maschinenexterne Flugverhalten der Saatkörner kann deren maschinenexterne Flugdauer betreffen. Ferner kann das Steuerungssystem den düngerspezifischen Kalibrierwert aus Düngereigenschaften, welche das maschineninterne Förderverhalten und/oder das maschinenexterne Flugverhalten der Düngerportionen beeinflussen, ermitteln. Das maschineninterne Förderverhalten der Düngerportionen kann deren maschineninterne Förderdauer betreffen. Das maschinenexterne Flugverhalten der Düngerportionen kann deren maschinenexterne Flugdauer betreffen. Das Ermitteln des maschineninternen Förderverhaltens und/oder des maschinenexternen Flugverhaltens der Saatkörner und/oder der Düngerportionen kann ein Berechnen oder ein Ablesen von Werten aus einem Kennfeld umfassen. Die Saatguteigenschaften, auf deren Grundlage der saatgutspezifische Kalibrierwert ermittelt wird, können die Saatkornform, die Saatkorngröße, das Saatkorngewicht, insbesondere das Tausendkorngewicht, die Oberflächenbeschaffenheit bzw. die Reibwerte und/oder die Art der Beizung betreffen. Die Düngereigenschaften, auf deren Grundlage der düngerspezifische Kalibrierwert ermittelt wird, können die Düngerkornform, die Düngerkorngröße, die Düngerkorngrößenverteilung, das Düngerkorngewicht, die Oberflächenbeschaffenheit bzw. die Reibwerte der Düngerkörner und/oder die Feuchtigkeit der Düngerkörner betreffen.

Es ist darüber hinaus ein erfindungsgemäßes Verfahren vorteilhaft, bei welchem das Steuerungssystem den aus der Kalibrierdatenbank zu ladenden saatgutspezifischen Kalibrierwert auf Grundlage von Saatguteigenschaften bestimmt, welche das maschineninterne Förderverhalten und/oder das maschinenexterne Flugverhalten der Saatkörner beeinflussen. Die das maschineninterne Förderverhalten und/oder das maschinenexterne Flugverhalten der Saatkörner beeinflussenden Saatguteigenschaften können die Saatkornform, die Saatkorngröße, das Saatkorngewicht, die Saatkornoberflächenbeschaffenheit bzw. die Saatkornreibwerte und/oder die Art der Beizung der Saatkörner betreffen. Das Steuerungssystem kann ferner den aus der Kalibrierdatenbank zu ladenden düngerspezifischen Kalibrierwert auf Grundlage von Düngereigenschaften bestimmen, welche das maschineninterne Förderverhalten und/oder das maschinenexterne Flugverhalten der Düngerportionen beeinflussen. Die das maschineninterne Förderverhalten und/oder das maschinenexterne Flugverhalten der Düngerportionen beeinflussenden Düngereigenschaften können die Düngerkornform, die Düngerkorngröße, die Düngerkorngrößenverteilung, das Düngerkorngewicht, die Düngerkornoberflächenbeschaffenheit bzw. die Düngerkornreibwerte und/oder die Düngerkornfeuchtigkeit betreffen. Das Bestimmen des aus der Kalibrierdatenbank zu ladenden saatgutspezifischen Kalibrierwerts und/oder das Bestimmen des aus der Kalibrierdatenbank zu ladenden düngerspezifischen Kalibrierwerts kann ein Berechnen oder Ablesen eines Werts aus einem Kennfeld umfassen.

Es ist darüber hinaus ein erfindungsgemäßes Verfahren vorteilhaft, bei welchem das Steuerungssystem die Saatguteigenschaften, welche das maschineninterne Förderverhalten und/oder das maschinenexterne Flugverhalten der Saatkörner beeinflussen, aus einer manuellen Parametereingabe eines Bedieners an einer elektronischen Bedieneinheit des Steuerungssystems oder einem elektronischen Mobilgerät des Steuerungssystems übernimmt. Alternativ oder zusätzlich kann das Steuerungssystem die Düngereigenschaften, welche das maschineninterne Förderverhalten und/oder das maschinenexterne Flugverhalten der Düngerportionen beeinflussen, aus einer manuellen Parametereingabe eines Bedieners an einer elektronischen Bedieneinheit des Steuerungssystems oder einem elektronischen Mobilgeräts des Steuerungssystems übernehmen. Die Saatguteigenschaften, welche das maschineninterne Förderverhalten und/oder das maschinenexterne Flugverhalten der Saatkörner beeinflussen, und/oder die Düngereigenschaften, welche das maschineninterne Förderverhalten und/oder das maschinenexterne Flugverhalten der Düngerportionen beeinflussen, können von dem Bediener beispielsweise aus Datenblättern zu dem Saatgut bzw. dem Dünger entnommen werden.

Es ist außerdem ein erfindungsgemäßes Verfahren bevorzugt, bei welchem das Steuerungssystem die Saatguteigenschaften, welche das maschineninterne Förderverhalten und/oder das maschinenexterne Flugverhalten beeinflussen, durch Auswerten einer durch das elektronische Mobilgerät erzeugten Bildaufnahme des Saatguts ermittelt. Alternativ oder zusätzlich kann das Steuerungssystem die Düngereigenschaften, welche das maschineninterne Förderverhalten und/oder das maschinenexterne Flugverhalten der Düngerportionen beeinflussen, durch Auswerten einer durch das elektronische Mobilgerät erzeugten Bildaufnahme des Düngers ermitteln. Das Verfahren kann ferner das Erzeugen einer Bildaufnahme des Saatguts und/oder das Erzeugen einer Bildaufnahme des Düngers mittels einer Kamera des elektronischen Mobilgeräts umfassen. Das Saatgut und der Dünger können beim Erzeugen der Bildaufnahmen zusammen oder separat voneinander abfotografiert werden. Alternativ oder zusätzlich zum Ermitteln der Saatguteigenschaften und/oder der Düngereigenschaften können auch eine oder mehrere erzeugte Bildaufnahmen zur Erfassung bzw. Identifikation der Saatgutsorte bzw. der Düngersorte aufgewertet werden, sodass anhand der erfassten Saatgutsorte bzw. Düngersorte ein saatgutspezifischer Kalibrierwert und/oder ein düngerspezifischer Kalibrierwert von einer Kalibrierdatenbank abgerufen werden kann.

Es ist darüber hinaus ein erfindungsgemäßes Verfahren vorteilhaft, bei welchem der saatgutspezifische Kalibrierwert ein saatgutspezifischer Korrekturwert ist, mittels welchem ein sich auf ein Referenzsaatgut beziehender Referenzbetrieb der Vereinzelungseinrichtung zur Erzielung der vorgegebenen örtlichen Ablagebeziehung von Saatkörnern und Düngerportionen zumindest temporär saatgutspezifisch angepasst wird. Alternativ oder zusätzlich ist der düngerspezifische Kalibrierwert ein düngerspezifischer Korrekturwert, mittels welchem ein sich auf einen Referenzdünger beziehender Referenzbetrieb der Portioniereinrichtung zur Erzielung der vorgegebenen örtlichen Ablagebeziehung von Saatkörnern und Düngerportionen zumindest temporär düngerspezifisch angepasst wird. Der saatgutspezifische Korrekturwert bringt hierbei zum Ausdruck, wie stark das maschineninterne Förderverhalten und/oder das maschinenexterne Flugverhalten des auszubringenden Saatguts von dem maschineninternen Förderverhalten und/oder dem maschinenexternen Flugverhalten des Referenzsaatguts abweicht. Der düngerspezifische Korrekturwert gibt an, wie stark das maschineninterne Förderverhalten und/oder das maschinenexterne Flugverhalten der auszubringenden Düngersorte von dem maschineninternen Förderverhalten und/oder dem maschinenexternen Flugverhalten des Referenzdüngers abweicht.

In einer Weiterbildung des erfindungsgemäßen Verfahrens gibt das Steuerungssystem der Vereinzelungseinrichtung das Betriebsverhalten aufgrund mehrerer saatgutspezifischer Kalibrierwerte vor, wobei die saatgutspezifischen Kalibrierwerte das maschineninterne Förderverhalten und/oder das maschinenexterne Flugverhalten der Saatkörner charakterisieren. Alternativ oder zusätzlich gibt das Steuerungssystem der Portioniereinrichtung das Betriebsverhalten aufgrund mehrerer düngerspezifischer Kalibrierwerte vor, wobei die düngerspezifischen Kalibrierwerte das maschineninterne Förderverhalten und/oder das maschinenexterne Flugverhalten der Düngerportionen charakterisieren. Über die Kalibrierwerte werden die maschineninternen Förderdauern und/oder die maschinenexternen Flugdauern der Saatkörner und/oder der Düngerportionen bestimmt. Die zur Ermittlung der Förderdauer und/oder der Flugdauer relevanten Parameter werden vom Anwender in das Terminal oder das Mobilgerät eingegeben.

In einer weiteren bevorzugten Ausführung des erfindungsgemäßen Verfahrens ermittelt das Steuerungssystem das der Vereinzelungseinrichtung und/oder der Portioniereinrichtung vorgegebene Betriebsverhalten auf Grundlage zumindest eines bodenspezifischen Kalibrierwerts. Der bodenspezifische Kalibrierwert ist abhängig von den Bodeneigenschaften der landwirtschaftlichen Nutzfläche. Die Bodeneigenschaften können die Beschaffenheit des Bodens, beispielsweise den Eindringwiderstand, die Bodenart oder den Bodentyp, die Bodenfeuchtigkeit, die Bodennässe, den Anteil der groben Kluten oder Steine im Boden und/oder die Bodenverdichtung betreffen. Hinsichtlich der Bodenart bzw. des Bodentyps können beispielsweise Lehmböden und Sandböden unterschieden werden. Der Eindringwiderstand beeinflusst beispielsweise die Auslenkung eines Düngeschars nach hinten, sodass hiermit auch die Förder- und Flugdauer des Düngers beeinflusst wird. Durch die Berücksichtigung eines bodenspezifischen Kalibrierwerts wird die Auslenkung bzw. der räumliche Versatz von Düngeschar und Säschar bei der Erzielung der vorgegebenen örtlichen Lagebeziehung miteinbezogen. Alternativ oder zusätzlich kann das Verfahren das Ermitteln der Lagebeziehung zwischen Düngeschar und Säschar umfassen. Hierzu kann die Lage, insbesondere die Ausrichtung und/oder Entfernung des Düngeschars und/oder des Säschars zu feststehenden Bauteilen und/oder einem Trägerrahmen ermittelt werden.

Erfindungsgemäß ermittelt das Steuerungssystem das der Vereinzelungseinrichtung und/oder der Portioniereinrichtung vorgegebene Betriebsverhalten auf Grundlage zumindest eines maschinenspezifischen Kalibrierwerts. Der maschinenspezifische Kalibrierwert ist abhängig von beabsichtigten Einstellungen oder Eigenschaften der Ausbringmaschine. Die beabsichtigten Einstellungen können die beabsichtigte Aussaatstärke, die beabsichtigte Fahrgeschwindigkeit, den beabsichtigten Gebläsedruck, die beabsichtigte Vereinzelungsscheibendrehzahl, den beabsichtigten Schardruck vom Säschar und/oder die beabsichtigte Arbeitstiefe des Düngeschars und/oder des Säschars betreffen. Die Eigenschaften der Ausbringmaschine können den Vereinzelungsscheibentyp, die Anzahl der Löcher auf der Vereinzelungsscheibe, und/oder den Typ des Düngeschars betreffen. Hinsichtlich des Düngeschartyps kann beispielsweise zwischen einem Einscheibenschar, einem Doppelscheibenschar, einem Blattfederschar und einem gekoppelten Schar unterschieden werden. Einige der Maschinenparameter können sich während der Fahrt, also während des Ausbringvorgangs, verändern und können nicht als feststehende Eingabewerte angesehen werden, sondern sind während des Ausbringvorgangs kontinuierlich zu messen. Der Gebläsedruck kann beispielsweise während des Ausbringvorgangs verändert werden, um die Vereinzelung des Saatguts ohne Abstreifer auf verschiedene Korngrößen anpassen zu können. Bei variierendem Gebläsedruck wird das Saatgut im Schusskanal unterschiedlich stark beschleunigt, wodurch sich die Fluggeschwindigkeit ändert - bei hohem Gebläsedruck ist die Flugdauer kurz, bei niedrigem Gebläsedruck ist die Flugdauer verlängert. Diese Erkenntnis kann im Sinne der Erfindung genutzt werden, um das Betriebsverhalten der Vereinzelungseinrichtung und das Betriebsverhalten der Portioniereinrichtung aufeinander abzustimmen. Der Gebläsedruck kann variiert werden, um eine bestimmte Flugdauer zur Erzielung der gewünschten Ablagebeziehung zu erreichen. Der Gebläsedruck kann beispielsweise kontinuierlich zentral am Gebläse oder dezentral in den Vereinzelungen gemessen und/oder eingestellt werden werden. Ebenso kann der Gebläsedruck auch die Flugdauer der Düngerportion beeinflussen, wenn die Luft vor der Portioniereinrichtung nicht komplett abgeschieden wird. Falls einige der genannten Parameter nicht direkt erkennbar sind, können Prüf- oder Messverfahren von einem Bediener ausgeführt werden. Die von dem Bediener auszuführenden Prüf- oder Messverfahren können einen Test für die Düngerkornreibung, einen Schütteltest, die Verwendung einer Look-Up-Anwendung auf einem mobilen Endgerät und/oder das Einschicken einer Saatgutprobe und/oder einer Düngerprobe umfassen. Mithilfe der eingegebenen Eigenschaften und Parameter können die Flugdauern durch die elektronische Bedieneinheit oder das elektronische Mobilgerät berechnet und anschließend beim Abstimmen des Betriebsverhaltens der Vereinzelungseinrichtung und des Betriebsverhalten der Portioniereinrichtung aufeinander berücksichtigt werden.

Die der Erfindung zugrundeliegende Aufgabe wird ferner durch ein Kalibriersystem der eingangs genannten Art gelöst, wobei das Steuerungssystem dazu eingerichtet, den saatgutspezifischen Kalibrierwert und/oder den düngerspezifischen Kalibrierwert aus einer manuellen Kalibrierwerteingabe eines Bedieners an einer elektronischen Bedieneinheit des Steuerungssystems oder einem elektronischen Mobilgerät des Steuerungssystems zu übernehmen oder aus einer Kalibrierdatenbank zu laden.

In einer bevorzugten Ausführungsform des Kalibriersystems ist dieses dazu eingerichtet, das Verfahren nach einer der vorstehend beschriebenen Ausführungsformen auszuführen. Hinsichtlich der Vorteile und Modifikationen des erfindungsgemäßen Kalibriersystems wird somit auch auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausbringaggregat, bei welchem der Betrieb der Vereinzelungseinrichtung und der Betrieb der Portioniereinrichtung mittels des erfindungsgemäßen Verfahrens aufeinander abstimmbar sind;
- Fig. 2: ein Ausführungsbeispiel des erfindungsgemäßen Kalibriersystems in einer schematischen Darstellung;
- Fig. 3: ein weiteres Ausführungsbeispiel des erfindungsgemäßen Kalibriersystems in einer schematischen Darstellung; und
- Fig. 4: ein weiteres Ausführungsbeispiel des erfindungsgemäßen Kalibriersystems in einer schematischen Darstellung.

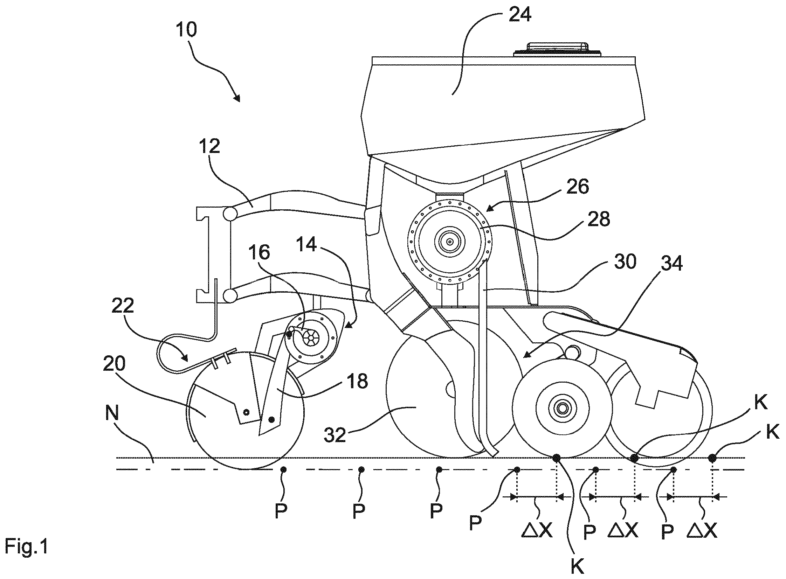

Die Fig. 1 zeigt ein Ausbringaggregat 10 einer landwirtschaftlichen Ausbringmaschine, mittels welcher Dünger in Form von Düngerportionen P und Saatgut in Form von vereinzelten Saatkörnern K in aufeinander abgestimmter Weise auf eine landwirtschaftliche Nutzfläche N ausbringbar sind. Die landwirtschaftliche Ausbringmaschine weist vorzugsweise mehrere der dargestellten Ausbringaggregate 10 auf, welche in Querrichtung, also quer zur Fahrtrichtung, nebeneinander angeordnet sind.

Das dargestellte Ausbringaggregat 10 weist eine Halterung 12 auf, welche ein Parallelogrammgestänge umfasst und mittels welcher das Ausbringaggregat 10 an einem Querträger der landwirtschaftlichen Ausbringmaschine befestigbar ist.

Das Ausbringaggregat 10 weist ferner eine Portioniereinrichtung 14 auf, mittels welcher Düngerportionen P erzeugt werden können. Die Portioniereinrichtung 14 weist einen Antrieb auf, welcher ein als Portionierflügel ausgebildetes Portionierelement 16 rotatorisch antreibt. Der Antrieb der Portioniereinrichtung 14 kann ein elektromotorischer, ein hydraulischer oder pneumatischer Antrieb sein.

Das sich in dem Gehäuse der Portioniereinrichtung 14 drehende Portionierelement 16 sammelt den kontinuierlich in das Gehäuse der Portioniereinrichtung 14 eintretenden Dünger ein und erzeugt somit bei jeder Umdrehung eine Düngerportion P. Die von der Portioniereinrichtung 14 erzeugten Düngerportionen P werden aufgrund der Drehbewegung des Portionierelements 16 zu zeitlich voneinander beabstandeten Düngerabgabezeitpunkten von der Portioniereinrichtung 14 in eine Düngerförderleitung 18 abgegeben. Die Düngerförderleitung 18 ist ein Schusskanal, über welchen die erzeugte Düngerportion P zunächst maschinenintern in Richtung der landwirtschaftlichen Nutzfläche N gefördert wird. Nach dem Verlassen der Düngerförderleitung 18 befindet sich die erzeugte Düngerportion P zunächst in einer Flugphase, bevor die Düngerportion P den Grund einer Düngerfurche erreicht. Die Düngerfurche wird mittels eines Düngeschars 22 erzeugt, wobei das Düngeschar 22 ein zwei Schneidscheiben 20 aufweisendes Doppelscheibenschar sein kann.

Das Ausbringaggregat 10 weist ferner eine Vereinzelungseinrichtung 26 auf, mittels welcher die in dem Vorratsbehälter 24 bevorrateten Saatkörner K vereinzelt werden können. Hierzu weist die Vereinzelungseinrichtung 26 einen Antrieb auf, welcher das als Vereinzelungsscheibe ausgebildete Vereinzelungselement 28 der Vereinzelungseinrichtung 26 rotatorisch antreibt. Der Antrieb der Vereinzelungseinrichtung 26 kann ein elektromotorischer, pneumatischer oder hydraulischer Antrieb sein.

Das als Vereinzelungsscheibe ausgebildete Vereinzelungselement 28 weist Kornaufnahmeausnehmungen auf, welche jeweils ein Saatkorn aufnehmen und somit vereinzeln. Die vereinzelten Saatkörner K werden dann zu zeitlich voneinander beabstandeten Kornabgabezeitpunkten von der Vereinzelungseinrichtung 26 in eine Kornförderleitung 30 abgegeben. Die Kornförderleitung 30 ist ein Schusskanal und dient zum Fördern der vereinzelten Saatkörner K in Richtung der landwirtschaftlichen Nutzfläche N. Nach Verlassen der Kornförderleitung 30 befinden sich die vereinzelten Saatkörner K zunächst in einer Flugphase, bevor diese den Grund einer Säfurche erreichen. Die Säfurche wird über ein oder mehrere Schneidscheiben 32 des Säschars 34 erzeugt.

Die erzeugten Düngerportionen P können in Abhängigkeit der Düngereigenschaften unterschiedliche maschineninterne Förderdauern in der Ausbringmaschine und unterschiedliche maschinenexterne Flugdauern nach der Abgabe durch die Ausbringmaschine aufweisen. Beispielsweise können die Größe, das Gewicht und die Oberflächenbeschaffenheit der Düngerkörner einen Einfluss auf die maschineninterne Förderdauer und die maschinenexterne Flugdauer der Düngerportionen haben. Die vereinzelten Saatkörner K können in Abhängigkeit der Saatguteigenschaften ebenfalls unterschiedliche maschineninterne Förderdauern in der Ausbringmaschine und unterschiedliche maschinenexterne Flugdauern nach der Abgabe durch die Ausbringmaschine aufweisen. Beispielsweise können die Größe, das Gewicht und die Oberflächenbeschaffenheit der Saatkörner K einen Einfluss auf die maschineninterne Förderdauer und die maschinenexterne Flugdauer der vereinzelten Saatkörner K haben.

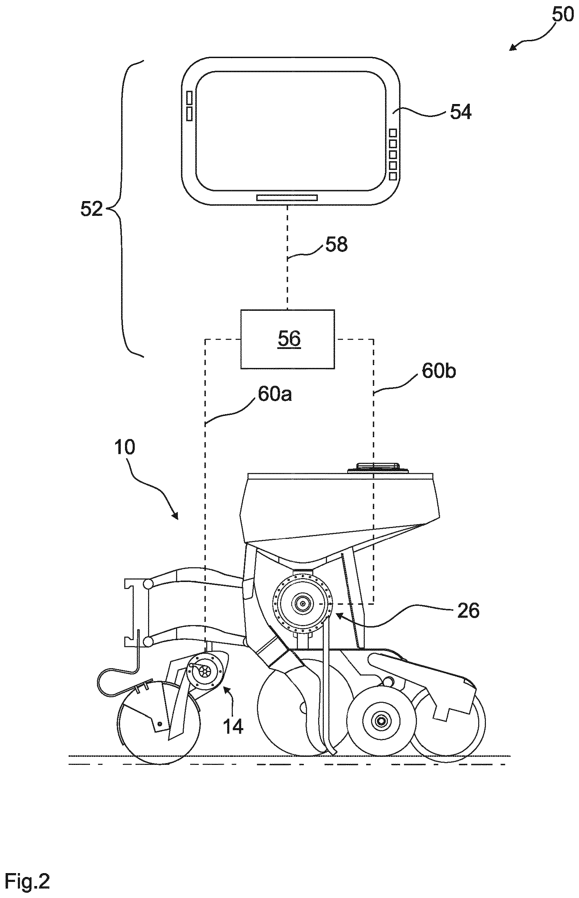

Zur Erzielung einer vorgegebenen örtlichen Ablagebeziehung Δx der Saatkörner K und der Düngerportionen P auf der landwirtschaftlichen Nutzfläche N sind der Betrieb der Vereinzelungseinrichtung 26 und der Betrieb der Portioniereinrichtung 14 aufeinander abzustimmen. Die vorgegebene Ablagebeziehung Δx kann beispielsweise ein vorgegebener Längsabstand zwischen den Düngerportionen P und den Saatkörnern K sein, wobei der vorgegebene Längsabstand auch null sein kann, sodass die vereinzelten Saatkörner K und die erzeugten Düngerportionen P in Längsrichtung keinen Abstand zueinander aufweisen. Zum Anpassen des Längsabstands Δx zwischen den abgelegten vereinzelten Saatkörnern K und den abgelegten erzeugten Düngerportionen P wird der Portioniereinrichtung 14 und/oder der Vereinzelungseinrichtung 26 zumindest temporär ein Betriebsverhalten von einer Steuerungseinrichtung 52 (vgl. Fig. 2 bis 4) vorgegeben. Über das von dem Steuerungssystem 52 vorgegebene Betriebsverhalten für die Portioniereinrichtung 14 und/oder die Vereinzelungseinrichtung 26 wird eine Anpassung des Zeitversatzes zwischen den Kornabgabezeitpunkten der Vereinzelungseinrichtung 26 und den Düngerabgabezeitpunkten an der Portioniereinrichtung 14 veranlasst. Bei dem dargestellten Ausbringaggregat 10 kann dies dadurch erfolgen, dass über das von dem Steuerungssystem 52 vorgegebene Betriebsverhalten eine temporäre Abweichung von einem beabsichtigten Drehzahlverhältnis des Vereinzelungselements 28 und des Portionierelements 16 veranlasst wird, sodass sich der Längsabstand Δx zwischen den Düngerportionen P und den Saatkörnern K verändert.

In den Fig. 2 bis 4 sind Kalibriersysteme 50 dargestellt, deren Steuerungssysteme 52 einer Portioniereinrichtung 14 und/oder einer Vereinzelungseinrichtung 26 zumindest temporär ein Betriebsverhalten vorgeben, um eine vorgegebene örtliche Ablagebeziehung Δx von Saatkörnern K und Düngerportionen P auf der landwirtschaftlichen Nutzfläche N zu erzielen. Das der Portioniereinrichtung 14 und/oder der Vereinzelungseinrichtung 26 zumindest temporär vorgegebene Betriebsverhalten ermitteln die Steuerungssysteme 52 auf Grundlage zumindest eines saatgutspezifischen Kalibrierwerts und/oder auf Grundlage zumindest eines düngerspezifischen Kalibrierwerts.

Bei dem in der Fig. 2 dargestellten Ausführungsbeispiel umfasst das Steuerungssystem 52 eine als Terminal ausgebildete elektronische Bedieneinheit 54, welche über die signalleitende Verbindung 58 mit einer elektronischen Steuereinheit 56 verbunden ist, wobei die elektronische Steuereinheit der Jobrechner der landwirtschaftlichen Ausbringmaschine ist. Die elektronische Steuereinheit 56 ist über die signalleitenden Verbindungen 60a, 60b mit der Portioniereinrichtung 14 und der Vereinzelungseinrichtung 26 verbunden, um diesen zumindest temporär ein Betriebsverhalten vorgeben zu können.

Der saatgutspezifische Kalibrierwert und/oder der düngerspezifische Kalibrierwert, welche zur Erzielung des vorgegebenen Längsabstands Δx zwischen den Düngerportionen P und den Saatkörnern K erforderlich sind, können von einem Bediener über die elektronische Bedieneinheit 54 eingegeben werden, sodass das Steuerungssystem 52 den saatgutspezifischen Kalibrierwert und/oder den düngerspezifischen Kalibrierwert aus der manuellen Kalibrierwerteingabe des Bedieners übernimmt. Der Bediener kann den saatgutspezifischen Kalibrierwert und/oder den düngerspezifischen Kalibrierwert beispielsweise aus einer Kalibriertabelle oder einem Kalibrierhinweis entnehmen, wobei die Kalibriertabelle oder der Kalibrierhinweis beispielsweise vom Hersteller der Ausbringmaschine bereitgestellt wird.

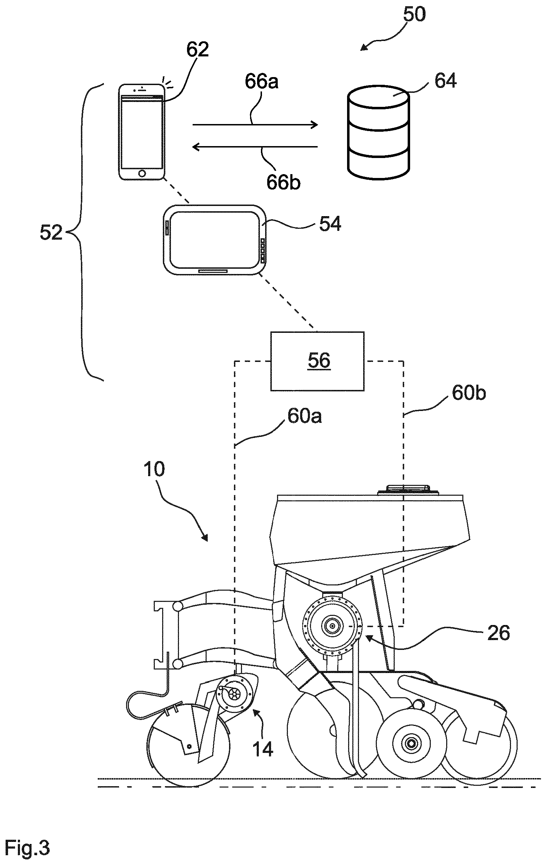

Die Fig. 3 zeigt ein Kalibriersystem 50, bei welchem das Steuerungssystem 52 ein Mobilgerät 62 umfasst. Das Mobilgerät 62 ist ein Mobilfunkgerät, nämlich ein Smartphone. Das Steuerungssystem 52 kann den saatgutspezifischen Kalibrierwert und/oder den düngerspezifischen Kalibrierwert in diesem Fall über das Mobilgerät 62 aus einer Kalibrierdatenbank 64 laden. Hierzu kann auf dem Mobilgerät 62 eine Kalibrieranwendung installiert sein, welche es dem Bediener ermöglicht, das auszubringende Saatgut aus einer Saatgutauflistung auszuwählen. Ferner kann der Benutzer über die Kalibrieranwendung auf dem Mobilgerät 62 den auszubringenden Dünger aus einer Düngerauflistung auswählen. Nach der Auswahl des auszubringenden Saatguts und des auszubringenden Düngers kann das Mobilgerät 62 dann über die signalleitende Verbindung 66a eine Kalibrierwertanfrage an die Kalibrierdatenbank 64 senden. Auf Grundlage der Kalibrierwertanfrage kann die Kalibrierdatenbank 64 dem Mobilgerät 62 dann einen Kalibrierdatensatz über die Verbindung 66b bereitstellen, wobei der Kalibrierdatensatz den saatgutspezifischen Kalibrierwert und/oder den düngerspezifischen Kalibrierwert umfasst.

Die abgerufenen Kalibrierwerte können anschließend der als Terminal ausgebildeten elektronischen Bedieneinheit 54 bereitgestellt werden, welche temporäre Betriebsvorgaben für die Portioniereinrichtung 14 und die Vereinzelungseinrichtung 26 auf Grundlage der Kalibrierwerte ermittelt und der elektronischen Steuereinheit 56 der landwirtschaftlichen Ausbringmaschine bereitstellt. Die elektronische Steuereinheit 56 veranlasst dann die Umsetzung der vorgegebenen Betriebsverhalten an der Portioniereinrichtung 14 und der Vereinzelungseinrichtung 26, sodass der vorgegebene Längsabstand Δx der erzeugten Düngerportionen P und vereinzelten Saatkörner K auf der landwirtschaftlichen Nutzfläche N eingehalten wird.

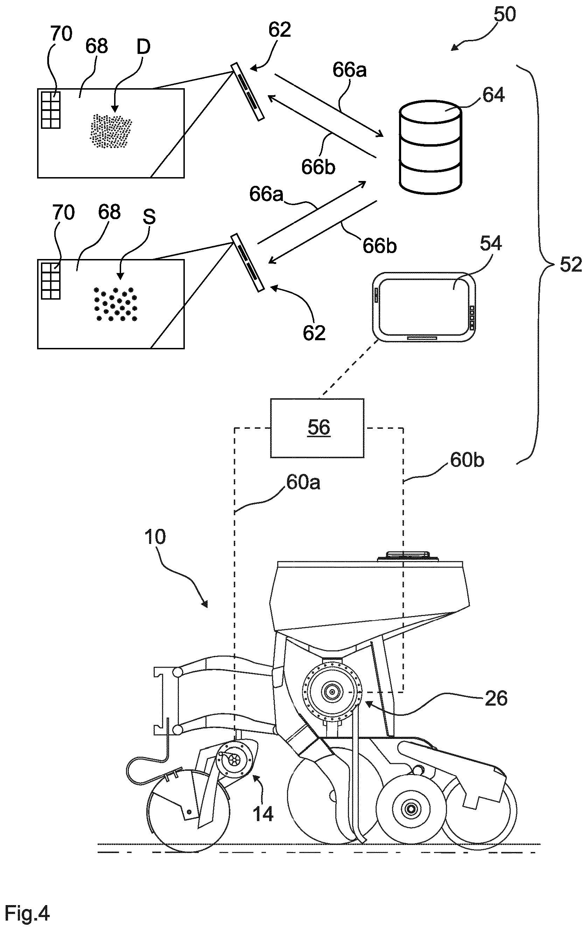

Die Fig. 4 zeigt ein Kalibriersystem 50, bei welchem der saatgutspezifische Kalibrierwert und der düngerspezifische Kalibrierwert auf Grundlage von Bildaufnahmen ermittelt werden. Hierzu wird mittels einer Kamera des als Smartphone ausgebildeten Mobilgeräts 62 eine Bildaufnahme des Düngers D und des Saatguts S erzeugt. Der Dünger D und das Saatgut S liegen während der Bildaufnahme auf einer Aufnahmematte 68, wobei die Aufnahmematte 68 Referenzangaben 70 aufweist, welche als Größenreferenz bei der folgenden Bildauswertung berücksichtigt werden. Mittels einer Bildauswertung, welche auf dem Mobilgerät 62 oder einem Computersystem der Kalibrierdatenbank 64 erfolgt, wird auf Grundlage der Bildaufnahmen der abfotografierte Dünger D und/oder das abfotografierte Saatgut S bestimmt. Zu dem Dünger D und dem Saatgut S sind auf der Kalibrierdatenbank 64 Kalibrierwerte hinterlegt, welche dem Mobilgerät 62 dann von Kalibrierdatenbank 64 bereitgestellt werden.

Die Kalibrierwerte werden dann an die als Terminal ausgebildete elektronische Bedieneinheit 54 gesendet, welche Betriebsvorgaben für die Portioniereinrichtung 14 und die Vereinzelungseinrichtung 26 auf Grundlage der Kalibrierwerte berechnet. Die berechneten Betriebsvorgaben werden der Portioniereinrichtung 14 und der Vereinzelungseinrichtung 26 dann über die Steuereinheit 56 der landwirtschaftlichen Ausbringmaschine bereitgestellt. Beim Ausführen der Betriebsvorgaben durch die Portioniereinrichtung 14 und die Vereinzelungseinrichtung 26 wird der vorgegebene Längsabstand Δx zwischen den auf der landwirtschaftlichen Nutzfläche N abgelegten Düngerportionen P und Saatkörnern K erreicht.

Der saatgutspezifische Kalibrierwert ist ein Kennwert, welcher das maschineninterne Förderverhalten und das maschinenexterne Flugverhalten der vereinzelten Saatkörnern K charakterisiert. Beispielsweise kann der saatgutspezifische Kalibrierwert auch ein Korrekturwert sein, mittels welchem sich ein auf ein Referenzsaatgut beziehender Referenzbetrieb der Vereinzelungseinrichtung 26 zur Erzielung der vorgegebenen örtlichen Ablagebeziehung Δx von Saatkörnern K und Düngerportionen P zumindest temporär saatgutspezifisch angepasst wird.

Der düngerspezifische Kalibrierwert ist ein Kennwert, welcher das maschineninterne Förderverhalten und das maschinenexterne Flugverhalten der erzeugten Düngerportionen P charakterisiert. Der düngerspezifische Kalibrierwert kann ein düngerspezifischer Korrekturwert sein, mittels welchem ein sich auf einen Referenzdünger beziehender Referenzbetrieb der Portioniereinrichtung 14 zur Erzielung der vorgegebenen örtlichen Ablagebeziehung Δx von Saatkörnern K und Düngerportionen P zumindest temporär düngerspezifisch angepasst wird.

### Bezugszeichenliste

- 10: Ausbringaggregat
- 12: Halterung
- 14: Portioniereinrichtung
- 16: Portionierelement
- 18: Düngerförderleitung
- 20: Schneidscheibe
- 22: Düngeschar
- 24: Vorratsbehälter
- 26: Vereinzelungseinrichtung
- 28: Vereinzelungselement
- 30: Kornförderleitung
- 32: Schneidscheibe
- 34: Säschar
- 50: Kalibriersystem
- 52: Steuerungssystem
- 54: Bedieneinheit
- 56: Steuereinheit
- 58: Verbindung
- 60a, 60b: Verbindungen
- 62: Mobilgerät
- 64: Kalibrierdatenbank
- 66a, 66b: Verbindungen
- 68: Aufnahmematte
- 70: Referenzangaben
- P: Düngerportionen
- D: Dünger
- N: Nutzfläche
- K: Saatkörner
- S: Saatgut
- Δx: Ablagebeziehung

## Patentansprüche

1. Verfahren zum Abstimmen des Betriebs einer Vereinzelungseinrichtung (26) und des Betriebs einer Portioniereinrichtung (14) einer landwirtschaftlichen Ausbringmaschine aufeinander zur Erzielung einer vorgegebenen örtlichen Ablagebeziehung (Δx) beim Ablegen von mittels der Vereinzelungseinrichtung (26) vereinzelten Saatkörnern (K) und mittels der Portioniereinrichtung (14) erzeugten Düngerportionen (P) auf eine landwirtschaftliche Nutzfläche (N), wobei die Vereinzelungseinrichtung (26) zum Vereinzeln von Saatkörnern (K) ein rotierend angetriebenes Vereinzelungselement (28) und die Portioniereinrichtung (14) zum Erzeugen von Düngerportionen (P) ein rotierend angetriebenes Portionierelement (16) aufweist;
wobei ein mit der Vereinzelungseinrichtung (26) und/oder der Portioniereinrichtung (14) signalleitend verbundenes Steuerungssystem (52) zur Erzielung der vorgegebenen örtlichen Ablagebeziehung (Δx) von Saatkörnern (K) und Düngerportionen (P) der Vereinzelungseinrichtung (26) und/oder der Portioniereinrichtung (14) zumindest temporär ein Betriebsverhalten vorgibt, über welches eine temporäre Abweichung von einem beabsichtigten Drehzahlverhältnis des Vereinzelungselements (28) und des Portionierelements (16) veranlasst wird und welches das Steuerungssystem (52) auf Grundlage zumindest eines saatgutspezifischen Kalibrierwerts und/oder zumindest eines düngerspezifischen Kalibrierwerts und auf Grundlage zumindest eines maschinenspezifischen Kalibrierwerts ermittelt;
wobei das Steuerungssystem (52) den saatgutspezifischen Kalibrierwert und/oder den düngerspezifischen Kalibrierwert
- aus einer manuellen Kalibrierwerteingabe eines Bedieners an einer elektronischen Bedieneinheit (54) des Steuerungssystems (52) oder einem elektronischen Mobilgerät (62) des Steuerungssystems (52) übernimmt; oder
- aus einer Kalibrierdatenbank (64) lädt.

2. Verfahren nach Anspruch 1,
**dadurch gekennzeichnet, dass**
- der zumindest eine saatgutspezifische Kalibrierwert ein Kennwert ist, welcher das maschineninterne Förderverhalten und/oder das maschinenexterne Flugverhalten der vereinzelten Saatkörner (K) charakterisiert; und/oder
- der zumindest eine düngerspezifische Kalibrierwert ein Kennwert ist, welcher das maschineninterne Förderverhalten und/oder das maschinenexterne Flugverhalten der erzeugten Düngerportionen (P) charakterisiert.

3. Verfahren nach Anspruch 1 oder 2,
**dadurch gekennzeichnet, dass**
- die von der Vereinzelungseinrichtung (26) vereinzelten Saatkörner (K) zu zeitlich voneinander beabstandeten Kornabgabezeitpunkten von der Vereinzelungseinrichtung (26), insbesondere in eine Kornförderleitung (30), abgegeben werden; und/oder
- die von der Portioniereinrichtung (14) erzeugten Düngerportionen (P) zu zeitlich voneinander beabstandeten Düngerabgabezeitpunkten von der Portioniereinrichtung (14), insbesondere in eine Düngerförderleitung (18), abgegeben werden;
wobei über das von dem Steuerungssystem (52) vorgegebene Betriebsverhalten vorzugsweise eine Anpassung des Zeitversatzes zwischen den Kornabgabezeitpunkten und den Düngerabgabezeitpunkten veranlasst wird.

4. Verfahren nach einem der vorstehenden Ansprüche,
**dadurch gekennzeichnet, dass** das Steuerungssystem (52)
- den aus der Kalibrierdatenbank (64) zu ladenden saatgutspezifischen Kalibrierwert auf Grundlage einer manuellen Saatgutauswahl eines Bedieners an einer elektronischen Bedieneinheit (54) des Steuerungssystems (52) oder einem elektronischen Mobilgerät (62) des Steuerungssystems (52) bestimmt; und/oder
- den aus der Kalibrierdatenbank (64) zu ladenden düngerspezifischen Kalibrierwert auf Grundlage einer manuellen Düngerauswahl eines Bedieners an einer elektronischen Bedieneinheit (54) des Steuerungssystems (52) oder einem elektronischen Mobilgerät (62) des Steuerungssystems (52) bestimmt.

5. Verfahren nach einem der vorstehenden Ansprüche,
**dadurch gekennzeichnet, dass** das Steuerungssystem (52)
- den saatgutspezifischen Kalibrierwert aus Saatguteigenschaften, welche das maschineninterne Förderverhalten und/oder das maschinenexterne Flugverhalten der Saatkörner (K) beeinflussen, ermittelt; und/oder
- den düngerspezifischen Kalibrierwert aus Düngereigenschaften, welche das maschineninterne Förderverhalten und/oder das maschinenexterne Flugverhalten der Düngerportionen (P) beeinflussen, ermittelt.

6. Verfahren nach einem der vorstehenden Ansprüche,
**dadurch gekennzeichnet, dass** das Steuerungssystem (52)
- den aus der Kalibrierdatenbank (64) zu ladenden saatgutspezifischen Kalibrierwert auf Grundlage von Saatguteigenschaften, welche das maschineninterne Förderverhalten und/oder das maschinenexterne Flugverhalten der Saatkörner (K) beeinflussen, bestimmt; und/oder
- den aus der Kalibrierdatenbank (64) zu ladenden düngerspezifischen Kalibrierwert auf Grundlage von Düngereigenschaften, welche das maschineninterne Förderverhalten und/oder das maschinenexterne Flugverhalten der Düngerportionen (P) beeinflussen, bestimmt.

7. Verfahren nach Anspruch 5 oder 6,
**dadurch gekennzeichnet, dass** das Steuerungssystem (52) die Saatguteigenschaften, welche das maschineninterne Förderverhalten und/oder das maschinenexterne Flugverhalten der Saatkörner (K) beeinflussen, und/oder die Düngereigenschaften, welche das maschineninterne Förderverhalten und/oder das maschinenexterne Flugverhalten der Düngerportionen (P) beeinflussen, aus einer manuellen Parametereingabe eines Bedieners an einer elektronischen Bedieneinheit (54) des Steuerungssystems (52) oder einem elektronischen Mobilgerät (62) des Steuerungssystems (52) übernimmt.

8. Verfahren nach einem der Ansprüche 5 bis 7,
**dadurch gekennzeichnet, dass** das Steuerungssystem (52)
- die Saatguteigenschaften, welche das maschineninterne Förderverhalten und/oder das maschinenexterne Flugverhalten der Saatkörner (K) beeinflussen, durch Auswerten einer durch das elektronische Mobilgerät (62) erzeugten Bildaufnahme des Saatguts ermittelt; und/oder
- die Düngereigenschaften, welche das maschineninterne Förderverhalten und/oder das maschinenexterne Flugverhalten der Düngerportionen (P) beeinflussen, durch Auswerten einer durch das elektronische Mobilgerät (62) erzeugten Bildaufnahme des Düngers ermittelt.

9. Verfahren nach einem der vorstehenden Ansprüche,
**dadurch gekennzeichnet, dass**
- der saatgutspezifische Kalibrierwert ein saatgutspezifischer Korrekturwert ist, mittels welchem ein sich auf ein Referenzsaatgut beziehender Referenzbetrieb der Vereinzelungseinrichtung (26) zur Erzielung der vorgegebenen örtlichen Ablagebeziehung (Δx) von Saatkörnern (K) und Düngerportionen (P) zumindest temporär saatgutspezifisch angepasst wird; und/oder
- der düngerspezifische Kalibrierwert ein düngerspezifischer Korrekturwert ist, mittels welchem ein sich auf einen Referenzdünger beziehender Referenzbetrieb der Portioniereinrichtung (14) zur Erzielung der vorgegebenen örtlichen Ablagebeziehung (Δx) von Saatkörnern (K) und Düngerportionen (P) zumindest temporär düngerspezifisch angepasst wird.

10. Verfahren nach einem der vorstehenden Ansprüche,
**dadurch gekennzeichnet, dass**
- das Steuerungssystem (52) der Vereinzelungseinrichtung (26) das Betriebsverhalten aufgrund mehrerer saatgutspezifischer Kalibrierwerte vorgibt, wobei die saatgutspezifischen Kalibrierwerte das maschineninterne Förderverhalten und/oder das maschinenexterne Flugverhalten der Saatkörner (K) charakterisieren; und/oder
- das Steuerungssystem (52) der Portioniereinrichtung (14) das Betriebsverhalten aufgrund mehrerer düngerspezifischer Kalibrierwerte vorgibt, wobei die düngerspezifischen Kalibrierwerte das maschineninterne Förderverhalten und/oder das maschinenexterne Flugverhalten der Düngerportionen (P) charakterisieren.

11. Verfahren nach einem der vorstehenden Ansprüche,
**dadurch gekennzeichnet, dass** das Steuerungssystem (52) das der Vereinzelungseinrichtung (26) und/oder der Portioniereinrichtung (14) vorgegebene Betriebsverhalten auf Grundlage zumindest eines bodenspezifischen Kalibrierwerts ermittelt.

12. Kalibriersystem (50) für eine landwirtschaftliche Ausbringmaschine zur Erzielung einer vorgegebenen örtlichen Ablagebeziehung (Δx) beim Ablegen von vereinzelten Saatkörner (K) und erzeugten Düngerportionen (P) auf eine landwirtschaftliche Nutzfläche (N), mit
- einer Vereinzelungseinrichtung (26) zum Vereinzeln von Saatkörnern (K), wobei die Vereinzelungseinrichtung (26) zum Vereinzeln von Saatkörnern (K) ein rotierend angetriebenes Vereinzelungselement (28) aufweist;
- einer Portioniereinrichtung (14) zum Erzeugen von Düngerportionen (P), wobei die Portioniereinrichtung (14) zum Erzeugen von Düngerportionen (P) ein rotierend angetriebenes Portionierelement (16) aufweist; und
- einem Steuerungssystem (52), welches mit der Vereinzelungseinrichtung (26) und/oder der Portioniereinrichtung (14) signalleitend verbunden und dazu eingerichtet ist, den Betrieb der Vereinzelungseinrichtung (26) und den Betrieb der Portioniereinrichtung (14) aufeinander abzustimmen;
wobei das Steuerungssystem (52) zur Erzielung der vorgegebenen örtlichen Ablagebeziehung (Δx) dazu eingerichtet ist, der Vereinzelungseinrichtung (26) und/oder der Portioniereinrichtung (14) zumindest temporär ein Betriebsverhalten vorzugeben, über welches eine temporäre Abweichung von einem beabsichtigten Drehzahlverhältnis des Vereinzelungselements (28) und des Portionierelements (16) veranlasst wird und welches das Steuerungssystem (52) auf Grundlage zumindest eines saatgutspezifischen Kalibrierwerts und/oder zumindest eines düngerspezifischen Kalibrierwerts und auf Grundlage zumindest eines maschinenspezifischen Kalibrierwerts ermittelt;
wobei das Steuerungssystem (52) dazu eingerichtet, den saatgutspezifischen Kalibrierwert und/oder den düngerspezifischen Kalibrierwert
- aus einer manuellen Kalibrierwerteingabe eines Bedieners an einer elektronischen Bedieneinheit (54) des Steuerungssystems (52) oder einem elektronischen Mobilgerät (62) des Steuerungssystems (52) zu übernehmen; oder
- aus einer Kalibrierdatenbank (64) zu laden.

## Claims

1. Method for coordinating the operation of a singling device (26) and the operation of a portioning device (14) of an agricultural spreading machine for achieving a predetermined local placement relationship (Δx) when placing grains of seed (K) singled by the singling device (26) and fertilizer portions (P) produced by the portioning device (14) on an agricultural area (N), wherein the singling device (26) has a rotatably driven singling element (28) for singling grains of seed (K) and the portioning device (14) has a rotatably driven portioning element (16) for producing fertilizer portions (P); wherein a control system (52) connected to the singling device (26) and/or the portioning device (14) in a signal-conducting manner predetermines, at least temporarily, an operating behavior for the singling device (26) and/or the portioning device (14) for achieving the predetermined local placement relationship (Δx) of grains of seed (K) and fertilizer portions (P), by which a temporary deviation from an intended rotation speed ratio of the singling element (28) and the portioning element (16) is caused, and which is determined by the control system (52) on the basis of at least one seed-specific calibration value and/or at least one fertilizer-specific calibration value and on the basis of at least one machine-specific calibration value;
wherein the control system (52)
- adopts the seed-specific calibration value and/or the fertilizer-specific calibration value from a manual calibration value input of an operator on an electronic control unit (54) of the control system (52) or an electronic mobile device (62) of the control system (52); or
- loads the seed-specific calibration value and/or the fertilizer-specific calibration value from a calibration database (64).

2. Method according to claim 1,
**characterized in that**
- the at least one seed-specific calibration value is a characteristic value which characterizes the machine-internal conveying behavior and/or the machine-external flight behavior of the singled grains of seed (K); and/or
- the at least one fertilizer-specific calibration value is a characteristic value which characterizes the machine-internal conveying behavior and/or the machine-external flight behavior of the fertilizer portions (P).

3. Method according to claim 1 or 2,
**characterized in that**
- the grains of seed (K) singled by the singling device (26) are discharged, in particular into a grain conveyor line (30), by the singling device (26) at temporal spaced-apart grain discharge time points; and/or
- the fertilizer portions (P) produced by the portioning device (14) are discharged, in particular into a fertilizer conveyor line (18), by the portioning device (14) at temporal spaced-apart fertilizer discharge time points;
wherein by the operating behavior predetermined by the control system (52) preferably an adjustment of the time offset between the grain discharge time points and the fertilizer discharge time points is caused.

4. Method according to one of the preceding claims,
**characterized in that** the control system (52)
- determines the seed-specific calibration value to be loaded from the calibration database (64) on the basis of a manual seed selection of an operator on an electronic control unit (54) of the control system (52) or an electronic mobile device (62) of the control system (52); and/or
- determines the fertilizer-specific calibration value to be loaded from the calibration database (64) on the basis of a manual fertilizer selection of an operator on an electronic control unit (54) of the control system (52) or an electronic mobile device (62) of the control system (52).

5. Method according to one of the preceding claims,
**characterized in that** the control system (52)
- determines the seed-specific calibration value from seed properties that influence the machine-internal conveying behavior and/or the machine-external flight behavior of the grains of seed (K); and/or
- determines the fertilizer-specific calibration value from fertilizer properties that influence the machine-internal conveying behavior and/or the machine-external flight behavior of the fertilizer portions (P).

6. Method according to one of the preceding claims,
**characterized in that** the control system (52)
- determines the seed-specific calibration value to be loaded from the calibration database (64) on the basis of seed properties that influence the machine-internal conveying behavior and/or the machine-external flight behavior of the grains of seed (K); and/or
- determines the fertilizer-specific calibration value to be loaded from the calibration database (64) on the basis of fertilizer properties that influence the machine-internal conveying behavior and/or the machine-external flight behavior of the fertilizer portions (P).

7. Method according to claim 5 or 6,
**characterized in that** the control system (52) adopts the seed properties that influence the machine-internal conveying behavior and/or the machine-external flight behavior of the grains of seed (K), and/or the fertilizer properties that influence the machine-internal conveying behavior and/or the machine-external flight behavior of the fertilizer portions (P) from a manual parameter input of an operator on an electronic control unit (54) of the control system (52) or an electronic mobile device (62) of the control system (52).

8. Method according to one of claims 5 to 7,
**characterized in that** the control system (52)
- determines the seed properties that influence the machine-internal conveying behavior and/or the machine-external flight behavior of the grains of seed (K) by evaluating an recorded image of the seed generated by the electronic mobile device (62); and/or
- determines the fertilizer properties that influence the machine-internal conveying behavior and/or the machine-external flight behavior of the fertilizer portions (P) by evaluating an recorded image of the fertilizer generated by the electronic mobile device (62).

9. Method according to one of the preceding claims,
**characterized in that**
- the seed-specific calibration value is a seed-specific correction value by means of which a reference operation of the singling device (26) relating to a reference seed is adapted, for achieving the predetermined local placement relationship (Δx) of grains of seed (K) and fertilizer portions (P), at least temporarily, in a seed-specific manner; and/or
- the fertilizer-specific calibration value is a fertilizer-specific correction value by means of which a reference operation of the portioning device (14) relating to a reference fertilizer is adapted, for achieving the predetermined local placement relationship (Δx) of grains of seed (K) and fertilizer portions (P), at least temporarily, in a fertilizer-specific manner.

10. Method according to one of the preceding claims,
**characterized in that**
- the control system (52) of the singling device (26) predetermines the operating behavior based on several seed-specific calibration values, wherein the seed-specific calibration values characterize the machine-internal conveying behavior and/or the machine-external flight behavior of the grains of seed (K); and/or
- the control system (52) of the portioning device (14) predetermines the operating behavior based on several fertilizer-specific calibration values, wherein the fertilizer-specific calibration values characterize the machine-internal conveying behavior and/or the machine-external flight behavior of the fertilizer portions (P).

11. Method according to one of the preceding claims,
**characterized in that** the control system (52) determines the operating behavior predetermined for the singling device (26) and/or the portioning device (14) on the basis of at least one soil-specific calibration value.

12. Calibration system (50) for an agricultural spreading machine for achieving a predetermined local placement relationship (Δx) when placing singled grains of seed (K) and produced fertilizer portions (P) on an agricultural area (N), with
- a singling device (26) for singling grains of seed (K), wherein the singling device (26) has a rotatably driven singling element (28) for singling grains of seed (K);
- a portioning device (14) for producing fertilizer portions (P), wherein the portioning device (14) has a rotatably driven portioning element (16) for producing fertilizer portions (P); and
- a control system (52) which is connected to the singling device (26) and/or the portioning device (14) in a signal-conducting manner and is set up to coordinate the operation of the singling device (26) and the operation of the portioning device (14);
wherein the control system (52), for achieving the predetermined local placement relationship (Δx), is set up to predetermine, at least temporarily, an operating behavior for the singling device (26) and/or the portioning device (14) by which a temporary deviation from an intended rotation speed ratio of the singling element (28) and the portioning element (16) is caused and which operating behavior is determined by the control system (52) on the basis of at least one seed-specific calibration value and/or at least one fertilizer-specific calibration value and on the basis of at least one machine-specific calibration value;
wherein the control system (52) is set up to
- adopt the seed-specific calibration value and/or the fertilizer-specific calibration value from a manual calibration value input of an operator on an electronic control unit (54) of the control system (52) or an electronic mobile device (62) of the control system (52); or
- load the seed-specific calibration value and/or the fertilizer-specific calibration value from a calibration database (64).

## Revendications

1. Procédé pour adapter l'un à l'autre le fonctionnement d'un dispositif d'individualisation (26) et le fonctionnement d'un dispositif de portionnement (14) d'une machine d'épandage agricole pour obtenir un rapport de dépose locale prédéterminé (Δx) lors de la dépose de graines de semence (K) séparées au moyen du dispositif d'individualisation (26) et de portions d'engrais (P) générées au moyen du dispositif de portionnement (14) sur une surface agricole utile (N), dans lequel le dispositif d'individualisation (26) destiné à séparer des graines de semence (K) présente un élément d'individualisation (28) entraîné en rotation, et le dispositif de portionnement (14) destiné à générer des portions d'engrais (P) présente un élément de portionnement (16) entraîné en rotation,
dans lequel un système de commande (52) relié, par transmission de signal, au dispositif d'individualisation (26) et/ou au dispositif de portionnement (14) pour obtenir le rapport de dépose locale prédéterminé (Δx) de graines de semence (K) et de portions d'engrais (P) du dispositif d'individualisation (26) et/ou du dispositif de portionnement (14) détermine au moins de manière temporaire un comportement de fonctionnement qui permet de provoquer un écart temporaire d'un rapport de vitesse prévu de l'élément d'individualisation (28) et de l'élément de portionnement (16), et que le système de commande (52) détermine sur la base d'au moins une valeur d'étalonnage spécifique aux semences et/ou d'au moins une valeur d'étalonnage spécifique aux engrais et sur la base d'au moins une valeur d'étalonnage spécifique à la machine ;
dans lequel le système de commande (52) reprend la valeur d'étalonnage spécifique aux semences et/ou la valeur d'étalonnage spécifique aux engrais
- à partir d'une saisie manuelle de la valeur d'étalonnage effectuée par un opérateur sur une unité de commande électronique (54) du système de commande (52) ou sur un appareil mobile électronique (62) du système de commande (52) ; ou
- les télécharge à partir d'une banque de données d'étalonnage (64).

2. Procédé selon la revendication 1,
**caractérisé en ce que**
- ladite au moins une valeur d'étalonnage spécifique aux semences est un paramètre qui caractérise le comportement de convoyage interne à la machine et/ou le comportement de vol, externe à la machine, des graines de semences (K) séparées ; et/ou
- ladite au moins une valeur d'étalonnage spécifique aux engrais est un paramètre qui caractérise le comportement de transport interne à la machine et/ou le comportement de vol, externe à la machine, des portions d'engrais (P) générées.

3. Procédé selon la revendication 1 ou 2,
**caractérisé en ce que**
- les graines de semence (K) séparées par le dispositif d'individualisation (26) sont délivrées par le dispositif d'individualisation (26), notamment dans un conduit de transport de graines (30), à des intervalles temporels de délivrance de graines ; et/ou
- les portions d'engrais (P) générées par le dispositif de portionnement (14) sont délivrées par le dispositif de portionnement (14), notamment dans un conduit de transport d'engrais (18), à des moments de délivrance d'engrais espacés temporellement les uns des autres ;
dans lequel, par l'intermédiaire du comportement de fonctionnement prédéfini par le système de commande (52), on provoque de préférence une adaptation du décalage temporel entre les moments de délivrance des graines et les moments de délivrance d'engrais.

4. Procédé selon l'une quelconque des revendications précédentes,
**caractérisé en ce que** le système de commande (52)
- détermine la valeur d'étalonnage spécifique aux semences, à télécharger à partir de la banque de données d'étalonnage (64), sur la base d'une sélection manuelle de semences effectuée par un opérateur sur une unité de commande électronique (54) du système de commande (52) ou sur un appareil mobile électronique (62) du système de commande (52) ; et/ou
- détermine la valeur d'étalonnage spécifique aux engrais, à télécharger à partir de la banque de données d'étalonnage (64), sur la base d'une sélection manuelle de l'engrais effectuée par un opérateur sur une unité de commande électronique (54) du système de commande (52) ou sur un appareil mobile électronique (62) du système de commande (52).

5. Procédé selon l'une quelconque des revendications précédentes,
**caractérisé en ce que** le système de commande (52)
- calcule ladite valeur d'étalonnage spécifique aux semences à partir de caractéristiques de semences qui influent sur le comportement de transport interne à la machine et/ou le comportement de vol, externe à la machine, des graines de semences (K) ; et/ou
- calcule ladite valeur d'étalonnage spécifique aux engrais à partir de caractéristiques d'engrais qui influent sur le comportement de transport interne à la machine et/ou le comportement de vol, externe à la machine, des portions d'engrais (P).

6. Procédé selon l'une quelconque des revendications précédentes,
**caractérisé en ce que** le système de commande (52)
- détermine ladite valeur d'étalonnage spécifique aux semences à télécharger à partir de la banque de données d'étalonnage (64), sur la base de caractéristiques de semences qui influent sur le comportement de transport interne à la machine et/ou le comportement de vol, externe à la machine, des graines de semences (K) ; et/ou
- détermine ladite valeur d'étalonnage spécifique aux engrais à télécharger à partir de la banque de données d'étalonnage (64), sur la base de caractéristiques d'engrais qui influent sur le comportement de transport interne à la machine et/ou le comportement de vol, externe à la machine, des portions d'engrais (P).

7. Procédé selon la revendication 5 ou 6,
**caractérisé en ce que** le système de commande (52) reprend les caractéristiques de semences qui influent sur le comportement de transport interne à la machine et/ou sur le comportement de vol, externe à la machine, des graines de semences (K), et/ou les caractéristiques d'engrais, qui influent sur le comportement de transport interne à la machine et/ou sur le comportement de vol, externe à la machine, des portions d'engrais (P), à partir d'une saisie manuelle de paramètres effectuée par un opérateur sur une unité de commande (54) électronique du système de commande (52) ou sur un appareil mobile (62) électronique dudit système de commande (52).

8. Procédé selon l'une quelconque des revendications 5 à 7,
**caractérisé en ce que** le système de commande (52)
- calcule les caractéristique de semences qui influent sur le comportement de transport interne à la machine et/ou sur le comportement de vol, externe à la machine, des graines de semences (K), par analyse d'une photographie des semences réalisée par ledit appareil mobile (62) électronique ; et/ou
- calcule les caractéristique d'engrais qui influent sur le comportement de transport interne à la machine et/ou sur le comportement de vol, externe à la machine, des portions d'engrais (P), par analyse d'une photographie de l'engrais réalisée par ledit appareil mobile (62) électronique.

9. Procédé selon l'une quelconque des revendications précédentes,
**caractérisé en ce que**
- la valeur d'étalonnage spécifique aux semences est une valeur de correction spécifique aux semences à l'aide de laquelle un fonctionnement de référence du dispositif d'individualisation (26) se rapportant à des semences de référence, est adapté au moins temporairement en termes de semences pour obtenir le rapport de dépose locale prédéterminé (Δx) de graines de semence (K) et de portions d'engrais (P) ; et/ou
- la valeur d'étalonnage spécifique aux engrais est une valeur de correction spécifique aux engrais à l'aide de laquelle un fonctionnement de référence du dispositif d'individualisation (14) se rapportant à un engrais de référence, est adapté au moins temporairement en termes d'engrais pour obtenir le rapport de dépose locale prédéterminé (Δx) de graines de semence (K) et de portions d'engrais (P).

10. Procédé selon l'une quelconque des revendications précédentes,
**caractérisé en ce que**
- le système de commande (52) du dispositif d'individualisation (26) détermine le comportement de fonctionnement sur la base de plusieurs valeurs d'étalonnage spécifiques aux semences, dans lequel les valeurs d'étalonnage spécifiques aux semences caractérisent le comportement de transport interne à la machine et/ou le comportement de vol, externe à la machine, des graines de semences (K) ; et/ou
- le système de commande (52) du dispositif de portionnement (14) détermine le comportement de fonctionnement sur la base de plusieurs valeurs d'étalonnage spécifiques aux engrais, dans lequel les valeurs d'étalonnage spécifiques aux engrais caractérisent le comportement de transport interne à la machine et/ou le comportement de vol, externe à la machine, des portions d'engrais (K).

11. Procédé selon l'une quelconque des revendications précédentes,
**caractérisé en ce que** le système de commande (52) calcule le comportement de fonctionnement prédéfini pour le dispositif d'individualisation (26) et/ou pour le dispositif de portionnement (14) sur la base d'au moins une valeur d'étalonnage spécifique au sol.

12. Système d'étalonnage (50) pour une machine d'épandage agricole, destiné à obtenir un rapport de dépose locale (Δx) prédéfini lors de la dépose de graines de semence (K) séparées et de portions d'engrais (P) générées sur une surface agricole utile (N), comprenant
- un dispositif d'individualisation (26) pour séparer des graines de semence (K), dans lequel ledit dispositif d'individualisation (26) destiné à séparer des graines de semences (K) présente un élément d'individualisation (28) entraîné en rotation ;
- un dispositif de portionnement (14) pour générer des portions d'engrais (P), dans lequel ledit dispositif de portionnement (14) destiné à générer des portions d'engrais (P) présente un élément de portionnement (16) entraîné en rotation ; et
- un système de commande (52) qui est relié par transmission de signal au dispositif d'individualisation (26) et/ou au dispositif de portionnement (14) et qui est destiné à adapter l'un à l'autre le fonctionnement du dispositif d'individualisation (26) et le fonctionnement du dispositif de portionnement (14) ;
dans lequel le système de commande (52) pour obtenir le rapport de dépose locale prédéterminé (Δx) est destiné à prédéfinir pour le dispositif d'individualisation (26) et/ou pour le dispositif de portionnement (14) au moins de manière temporaire un comportement de fonctionnement qui permet de provoquer un écart temporaire d'un rapport de vitesse prévu de l'élément d'individualisation (28) et de l'élément de portionnement (16), et que le système de commande (52) détermine sur la base d'au moins une valeur d'étalonnage spécifique aux semences et/ou d'au moins une valeur d'étalonnage spécifique aux engrais et sur la base d'au moins une valeur d'étalonnage spécifique à la machine ;
dans lequel le système de commande (52) est destiné à reprendre la valeur d'étalonnage spécifique aux semences et/ou la valeur d'étalonnage spécifique aux engrais
- à partir d'une saisie manuelle de la valeur d'étalonnage effectuée par un opérateur sur une unité de commande électronique (54) du système de commande (52) ou sur un appareil mobile électronique (62) du système de commande (52) ; ou
- les télécharge à partir d'une banque de données d'étalonnage (64).
